# EUROPEAN PATENT APPLICATION

(11) **EP 4 586 163 A1**
(43) Date of publication of application: **16.07.2025**
(21) Application number: 25151321.4
(22) Date of filing: 10.01.2025
(51) Int. Cl.: G06Q 10/0639, G06Q 10/105

(54) **ELECTRONIC COMMUNICATION SYSTEM AND METHOD WITH ADAPTIVE PERSONALIZATION AND COACHING**

(30) Priority: 11.01.2024 US 202418410764
(71) Applicant: Mitel Networks Corporation, Ottawa, Ontario K2K 3K1 (CA)
(72) Inventor: Braganza, Jonathan, Ottawa, K2E 6P2 (CA); Murthy, Tejas, Bangalore 560078 (IN); Naidoo, Logendra, Ottawa, K1S 0W8 (CA)
(74) Representative: McDougall, James

(57) **Abstract**

Electronic communication methods and systems for providing adaptive personalization and coaching are provided. Exemplary methods and systems employ a data extraction engine, a goal determination module, and a virtual assistant module to determine goals, preferences, and/or biases of a user and provide adaptive personalization and coaching to a user based on such information.

## Description

### FIELD OF THE INVENTION

The present disclosure generally relates to electronic communication methods and systems. More particularly, examples of the disclosure relate to electronic communication methods and systems with an adaptive and personalized virtual assistant.

### BACKGROUND OF THE DISCLOSURE

Electronic virtual assistants can be used for a variety of applications. For example, electronic virtual assistants can be used to provide information to one or more participants during an electronic communication.

Electronic virtual assistants are being developed that utilize conventional machine-learning algorithms that utilize public datasets. For example, an artificial intelligence (Al) system, such as ChatGPT, can be used to provide a broad knowledge base of information to various applications, which can provide an electronic virtual assistant. However, use of such public AI systems often results in assistance that lacks personalization to the individual user's specific inclinations and situational context. Further, such systems cannot take into consideration a user's goals, objectives, training plans, or the like, when providing suggestions or assistance to the user. Accordingly, improved electronic methods and systems are desired.

Any discussion of problems provided in this section has been included in this disclosure solely for the purpose of providing a background for the present invention and should not be taken as an admission that any or all of the discussion was known at the time the invention was made.

### SUMMARY

A first aspect of this disclosure provides an electronic communication method with adaptive personalization and coaching, the method comprising the steps of: using an application programming interface (API) gateway, determining permissions to one or more data sources; using a data extraction engine, extracting information from the one or more data sources to obtain extracted information; using a goal determination module, determining user preferences and goals information based on the extracted information; using a virtual assistant module, generating personalized coaching information based on the user preferences and goals information; and transmitting the personalized coaching information to a user device.

The step of using a goal determination module may comprise using natural language processing (NLP).

The step of using a goal determination module may comprise using a context determination engine to determine a context associated with the extracted information.

The step of using a goal determination module may comprise using a sentiment analysis engine to determine a sentiment associated with the extracted information.

The method may further comprise establishing a communication between the user device and a participant device.

The method may further comprise transmitting regulatory and standards information to the user device.

The method may further comprise storing the user preferences and goals information in a database.

The method may further comprise a step of updating user information based on the personalized coaching information.

The method may further comprise receiving from a user, user feedback, and updating the user preferences and goals based on the feedback.

The method may further comprise monitoring the one or more data sources for additional information.

The method may further comprise repeating the steps of: using a data extraction engine, extracting information from the one or more data sources to obtain extracted information; using a goal determination module, determining user preferences and goals based on the extracted information; using a virtual assistant module, generating personalized coaching information based on the user preferences and goals; and transmitting the personalized coaching information to a user device.

The method may further comprise determining one or more topics associated with the extracted information.

The method may further comprise machine learning to classify segments of the extracted information.

A second aspect of this disclosure provides an electronic communication system with adaptive personalization and coaching, the system comprising: an application programming interface (API) gateway coupled to one or more data sources; a data extraction engine to receive information from the one or more data sources and to generate extracted information; a goal determination engine to determine one or more of goals and preferences from the extracted information; and a virtual assistant module to provide personalized coaching information to a user device based on the one or more of goals and preferences.

The system may further comprise a database comprising user information.

The system may further comprise a user interface, wherein the user interface may be configured to receive a command from the user to endorse, suspend, and/or change a frequency of receipt of personalized coaching information by a user device.

The system may further comprise a context determination engine to determine a context of the extracted information.

The system may further comprise a sentiment analysis engine to determine a sentiment of the extracted information.

A third aspect of this disclosure provides an electronic communication system with adaptive personalization and coaching, the system comprising: one or more data sources; an application programming interface (API) gateway coupled to the one or more data sources; a data extraction engine to receive information from the one or more data sources and to generate extracted information; a goal determination engine to determine one or more of goals and preferences from the extracted information; and a virtual assistant module to provide personalized coaching information to a user device based on the one or more of goals and preferences.

The one or more data sources may comprise one or more of a communication server, a text server, an email server, a document server, and a social media server.

### BRIEF DESCRIPTION OF THE DRAWING FIGURES

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 illustrates an electronic communication method in accordance with exemplary embodiments of the disclosure;
FIGS. 2-5 illustrate exemplary processes or steps suitable for use in the electronic communication method illustrated in FIG. 1 in greater detail; and
FIG. 6 illustrates an electronic communication system in accordance with examples of the disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present disclosure.

### DETAILED DESCRIPTION OF EXEMPLARY EMBODIMENTS

The description of exemplary embodiments of the present disclosure provided below is merely exemplary and is intended for purposes of illustration only; the following description is not intended to limit the scope of the invention disclosed herein. Moreover, recitation of multiple embodiments having stated features is not intended to exclude other embodiments having additional features or other embodiments incorporating different combinations of the stated features.

As set forth in more detail below, embodiments of the disclosure relate to electronic communication systems and methods. The electronic communication systems and methods can be used in a variety of applications, such as personal, educational and/or work communications, and can use one or more of a variety of communication modes.

Exemplary methods and systems described below can employ a virtual assistant to provide personalized assistance, which can include, for example, personalized coaching to a user during an electronic communication. The systems and methods described herein can account for and integrate personal biases, values, goals, objectives, training plans, areas of improvements, inherent biases (e.g., environmentalism or an agile framework), and/or the like to provide information, such as coaching information, to a user during an electronic communication. The user can accept or decline such coaching information. Further, in some cases, the user can select a frequency of receipt of information from the virtual assistant. For example, the user may lower a frequency of receipt of such information, decline receipt of such information for a period of time, and/or may have such information sent to a database for later retrieval.

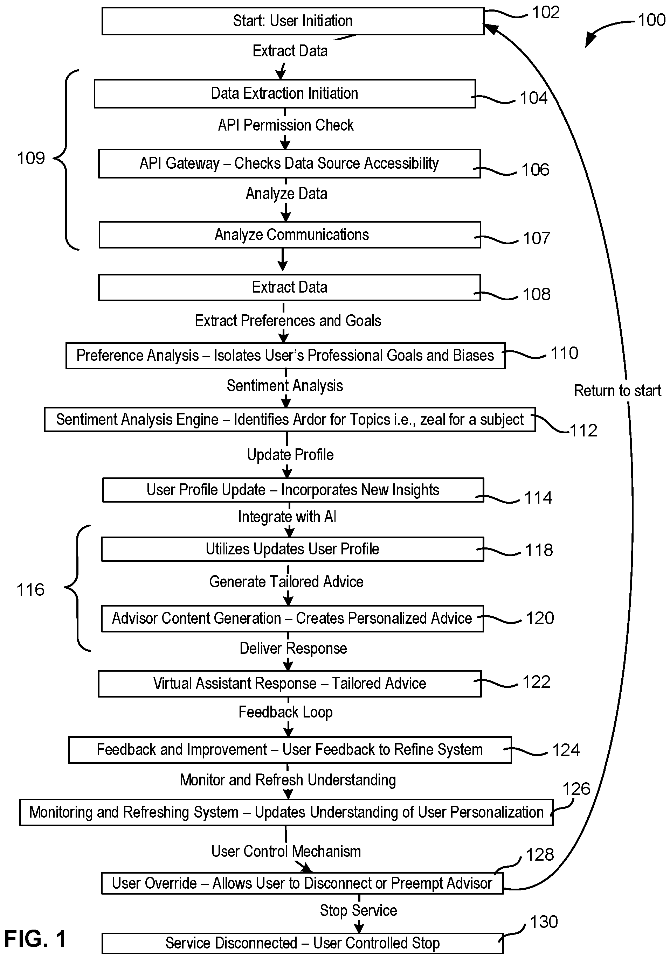

Turning now to the figures, FIG. 1 illustrates an electronic communication method 100 in accordance with exemplary embodiments of the disclosure. For illustration purposes, method 100 is described in the context of a work environment. However, unless otherwise noted, systems and methods in accordance with embodiments of the disclosure are not so limited. Exemplary systems and methods can generally be used to electronically communicate between two or more users.

Method 100 includes a start step 102, a data extraction step 109 that includes a data extraction initiation step 104, an application programming interface (API) permission determination step 106, a communication analysis step 107, a data (information) extraction step 108, a goal determination step 110, a sentiment determination step 112, a user profile update step 114, a virtual assistant information step 116, which can include using generative AI to update user information step 118 and generating personalized coaching information step 120, transmitting the personalized coaching information step 122, providing user feedback step 124, monitoring and refreshing user information step 126, a user override step 128, and an end communication step 130. Unless otherwise noted, methods in accordance with various examples of the disclosure need not include all of the steps illustrated in method 100. Further, although illustrated as sequential steps, unless otherwise noted, various steps of method 100 can be performed at the same time or in another order.

During step 102, a communication operation or method is initiated. Step 102 can include, for example, retrieving a communication application or client, such as a phone, chat, email, text, electronic meeting, electronic collaboration, social media, video, or augmented reality application. By way of example, a communication can be between an initiating user (a user who initiates a communication) and one or more participating users. In some cases, step 102 can include initiating a communication application or client to enter information, such as user information described below. In some cases, step 102 includes initiating a communication between a user device and a participant device.

At step 104, a data extraction process 109 can begin. Step 104 can be initiated by, for example, the application or client noted above. Additionally or alternatively, step 104 can be initiated independent from the application or client. For example, steps 104-114 can operate in the background.

During step 106, permissions to one or more data sources is determined-e.g., using an application programming interface (API) gateway. The one or more data sources can be or include, for example, one or more of a communication server, a text server, an email server, a document server, a social media server, goal management system, calendaring server, on-demand media server, location tracking system, IOT data aggregation server, or the like.

During step 107, after permissions to one or more data sources are determined in step 106, data or information is analyzed to determine whether suitable for extraction (e.g., correct format or the like). Data or information can then be extracted during step 108 to generate extracted information using a data extraction engine, such as the data extraction engine described below.

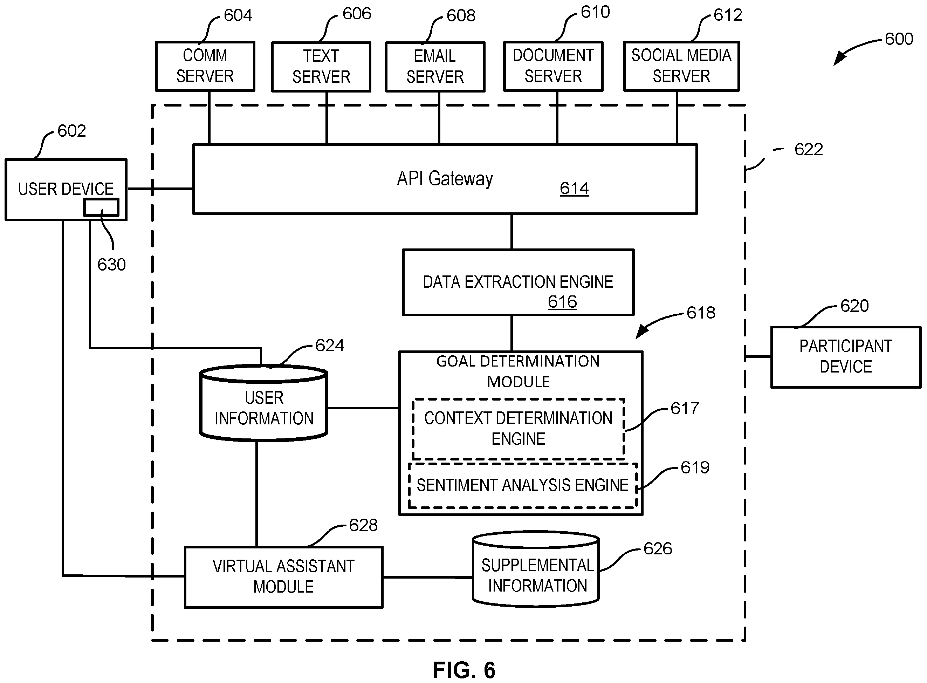

During step 110, a user's preferences and goals are determined based on the extracted information. For example, the preferences and goals information can be determined using natural language processing (NLP). The preferences and goals information can be determined, for example, using a goal determination module described below in connection with FIG. 6. The preferences and goals information can be stored in a database. Further, during step 110, a context of extracted information can be determined-e.g., using a context determination engine-and the context information can be stored in a database in addition to and may be associated with the preferences and goals information that is stored in the database.

During step 112, a sentiment associated with the extracted information is determined. The sentiment can be determined, for example, using a sentiment analysis engine, as described below. In some cases, step 112 can be optional.

During step 114, user information is updated based on the personalized coaching information. The updated user information can include the preferences and goals information obtained during step 110 and/or the sentiment information obtained during step 112. User information can additionally include name or username associated with the user and goals, preferences, biases, and other user information as described herein, which can be manually entered by the user.

During step 116, personalized coaching information is generated based on the user preferences and goals information. The personalized coaching information can be generated using a virtual assistant module described below.

As illustrated, step 116 can include accessing user profile information (sometimes referred to herein simply as user information) step 118 and generating the personalized coaching information based on the user preferences and goals information step 120.

During step 122, the personalized coaching information is transmitted to a user device. The personalized coaching information can be transmitted as part of the communication initiated during step 102 or as another communication. In accordance with examples of the disclosure, the personalized coaching information is transmitted as text to the user device, such that the user can read the personalized coaching information during the communication. In other cases, the personalized coaching information can be stored in a file (e.g., of a database as described herein) and accessed later.

During step 124, the user can provide feedback information regarding the personalized coaching information, which is received by a system, such that the system, such as system 600 described below, can learn the user's preferences for coaching information.

During step 126, user information can be updated based on the feedback information provided during step 124.

During step 128, a user can select frequency, endorse or temporarily suspend receipt of personalized coaching information received during a communication. For example, a user can select a time frequency-e.g., every 2, 5, 10, 15 minutes or a frequency based on sentiment of one or more users during the communication (e.g., increase frequency when anger is perceived and/or decrease frequency when pleasant sentiment is determined) or be based on algorithms that approximate the appropriate length of the pauses in virtual assistant speech to know when to resume assistance. For example, a pause of more than 2, 5, or 7 seconds can be used. In some cases, a user interface of a client or application as described herein is configured to receive a command from a user to either change the frequency, endorse or temporarily suspend the endorsement of all or certain personalized coaching information, thereby allowing the virtual assistant to adapt its recommendations and coaching information based on a current context or situation as indicated by the user. This could be helpful if, for example, a user adds the virtual assistant to join a meeting on their behalf or as a co-participant of an electronic communication. Methods of the present disclosure can include such steps.

During step 130, the electronic communication is terminated. The electronic communication can be terminated using the application or client or automatically-e.g., upon recognition of no voice activity for a predetermined amount of time.

As illustrated, various steps (e.g., steps 102-128 or a subset thereof) can be repeated. For example, the step of using a data extraction engine, extracting information from the one or more data sources to obtain extracted information; using a goal determination module, determining user preferences and goals based on the extracted information; using a virtual assistant module, generating personalized coaching information based on the user preferences and goals; and transmitting the personalized coaching information to a user device can be repeated one or more times during method 100.

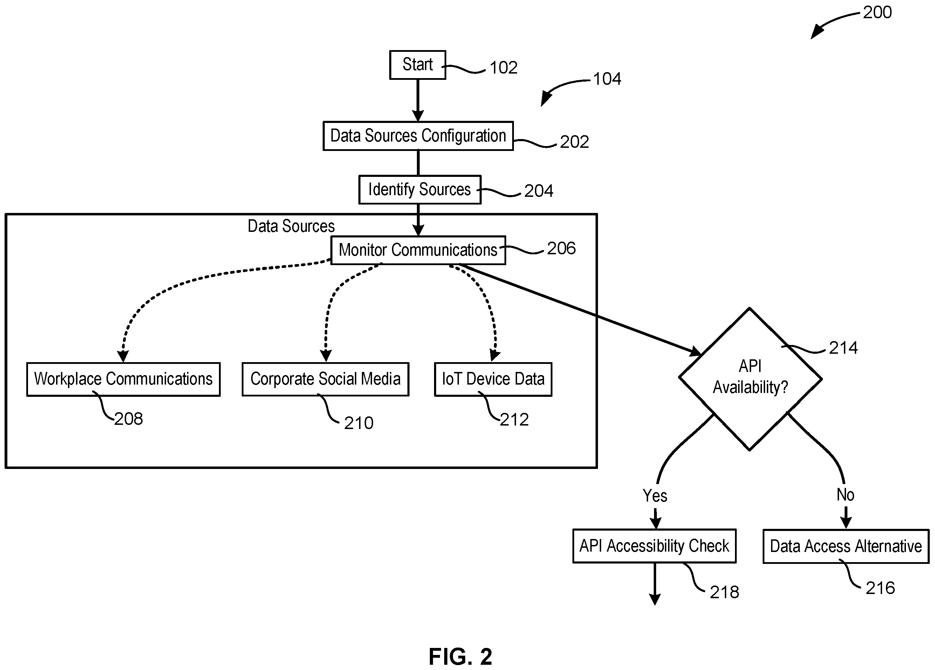

FIG. 2 illustrates an exemplary process 200 suitable for use as steps 102 and 104 described above. Step 102 can be as described above.

Step 104 can include a data source configuration step 202, an identify sources step 204, a data source monitoring step 206, and an API availability determination step 214. Each data source may contain user information, such that the method accesses only public information and information associated with a particular user. In some cases, at least one data source includes regulatory information, such that the virtual assistant can provide/transmit regulatory and/or standards information associated with key words of a communication to the user device. An exemplary method and system for determining keywords is disclosed in U.S. Application No. 16/989,619, entitled ELECTRONIC COMMUNICATION METHODS AND SYSTEMS FOR COLLABORATING AND COMMUNICATING IN MEETING ENVIRONMENTS, and filed August 10, 2020, the relevant contents of which are hereby incorporated herein by reference to the extent such contents do not conflict with the present disclosure.

During step 202, it is determined which of the array or plurality of data sources are helpful or most suitable for personalizing the coaching information. One cannot or should not assume all the data sources are of equal value. If the virtual assistant is looking for information in multiple sources, then the data sought after should be known in advance ('work objectives'; 'favorites'; temperature settings, 'outdoor vs. indoor'); otherwise the process is arbitrarily gathering data irrespective of the mission to assist on a particular topic or theme during a meeting. The method described herein shifts away from a generic one size fits all approach. Data Sources Configuration step 202 focuses on integrating a "BIOS" of user nuances, capturing personal and professional contexts to offer deeply personalized guidance. Traditional AI protocols can be applied using the personalized information. In accordance with aspects of the disclosure, the virtual assistant primes the monitoring sub-process on what to look for during the monitoring step 206, described below.

During step 204, data sources (e.g., data sources 208-210) to be monitored during step 206 can be identified. The data sources can be selected by a user, selected by an administrator, or automatically selected based on, for example, a user's position within an enterprise. Step 206 can include, for example, monitoring workplace communications (e.g., emails, project management forums like Jira/Confluence, documents, equipment and room reservations, and the like), as well as corporate social media, and loT devices for additional information. For instance, a tendency to book small meeting rooms can provide context on a worker's collaboration preferences.

During step 214, API availability can be determined. If a data source is not available, process 200 can proceed to step 216 of accessing information using alternative means, such as manually inputting information or receiving directions from an advisory system, such as an employee training apparatus or a coaching function designed to increase confidence on certain topics or assist on specific personal aspects possibly not known to the user. If the data source is available, process 200 proceeds to step 218 of API accessibility check, which can include connecting one or more-e.g., multiple universes of communication likely distinguished by third-party security and privacy provisions. For example, some communication monitoring activities are not permissible without a means to connect to different applications that house the data to be analyzed. This step can ensure the concurrent step of checking the API while monitoring is active and up to date (third applications often undergo frequent changes, so the connector API must be synchronized by the virtual assistant system as well).

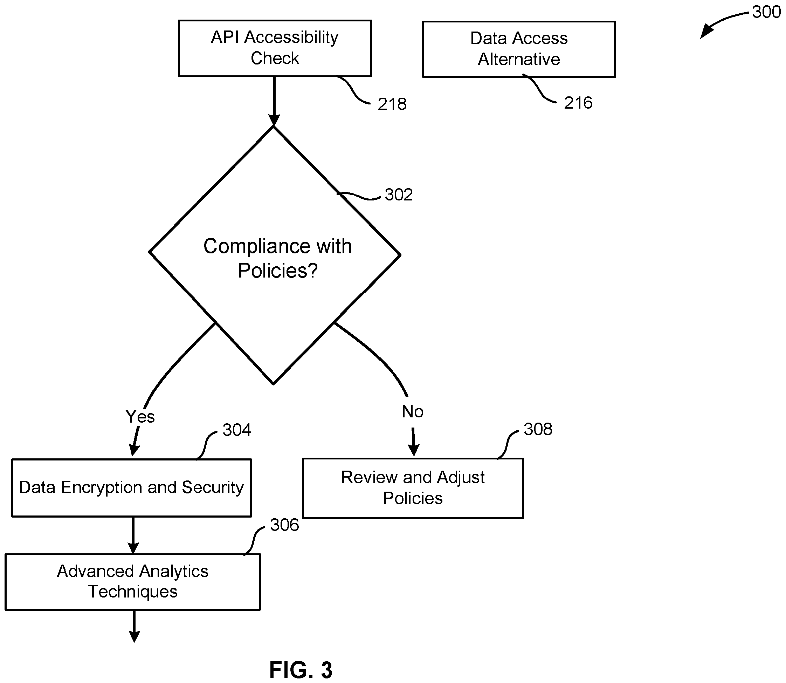

FIG. 3 illustrates a process 300 suitable for use with step 106 described above. As illustrated, process 300 includes a compliance determination step 302 to determine whether information from the data sources is compliant with data sharing policies of a system, such as system 600 described below. If the information is compliant, process 300 proceeds to step 304 of verifying data encryption and security and step 306 of advanced analytic techniques. If the information is not compliant with the policies, then process 300 proceeds to step 308 of reviewing and adjusting the policies. Step 308 can be performed automatically or manually-e.g., by a system administrator.

During step 304, data (information) can be extracted-e.g., using data encryption and security, which may be set by an administrator. Whether data is accessed in real-time or in batches, process 300 and method 100 can secure sensitive data via encryption methods like OAuth and HTTPS or the like to prevent or mitigate unauthorized access to extracted and/or user information. Step 306 can include a data extraction step, such as extract data step 107.

The advanced analytic techniques step 306 can be or include steps 110 and/or 112 described above. Step 306 can implement natural language processing (NLP) and machine learning to refine the data, discern sentiment, detect intent, and reveal workers' biases and preferences. Sentiment analysis through (e.g., standard) NLP tools can indicate personal inclinations. Topic modeling or determination associated with extracted information can be achieved via, for example, Latent Dirichlet Allocation (LDA; aka Berkeley topic modelling), which can highlight recurrent themes in communication, hinting at personal interests. Named Entity Recognition (NER) can be used to identify frequent references to specific entities and/or people, indicating a user's interests or goals. Frequency Analysis of words or phrases can signify a person's focused interest. Machine Learning Classifications can categorize extracted information or segments thereof into areas like "Career Goals" or "Project Objectives" to determine goals. Further, direct statements of goals and preferences in communications can train virtual assistants to recognize and adapt to a user's objectives. For example, a user can provide the system access to a folder for indexing and intaking documents pertaining to the outlining of goals or preferences or otherwise.

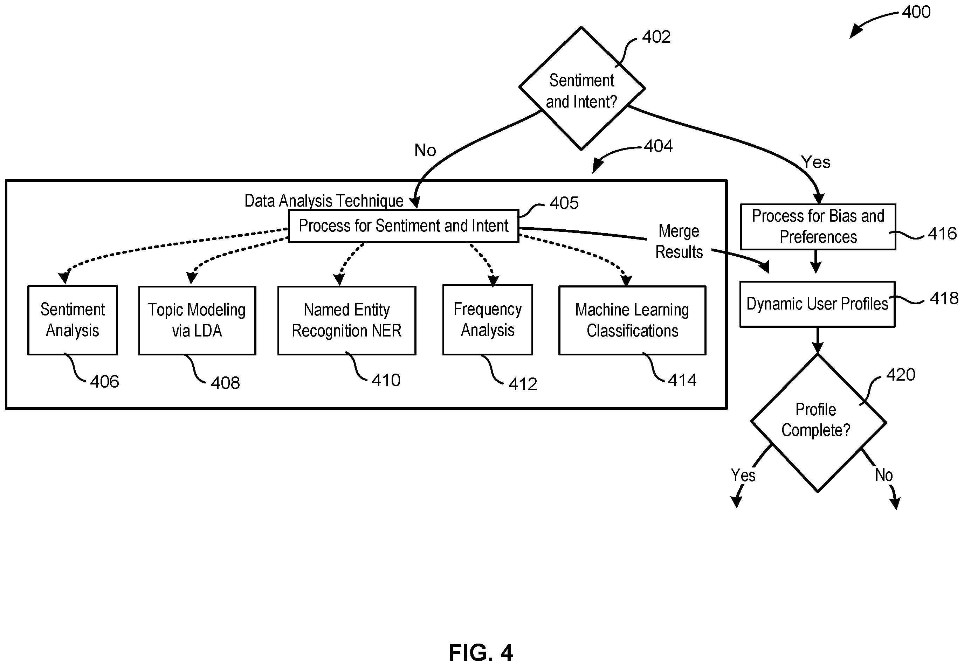

FIG. 4 illustrates an exemplary process 400 suitable for determining and using sentiment information. Process 400 can be used in connection with, for example, steps 110 and 112 described above. Process 400 can be used to, for example, determine topics, goals, biases, or the like, for each user from information associated with each user, and determine how passionate a user is about a particular topic, goal, bias, or the like.

During step 402, it is determined whether a sentiment or intent information is detected. If no, process 400 proceeds to step 404. If yes, process 400 proceeds to step 416.

Step 404 includes a step 405 of processing for sentiment and/or intent. During step 405, one or more engines, such as sentiment analysis engine 406, topic modeling engine 408, name recognition engine 410, frequency analytics engine 412, and machine learning classification engine 414, can be used to determine sentiment, topic, names, frequency of occurrence of various terms, and the like of extracted information.

During step 416, extracted information can be processed for bias and preference. During step 418, user (e.g., profile) information is updated. During this step, detected patterns or proclivities (tendencies to prefer something on a regular basis (e.g., diagram reference detected: "I always prefer a diagram to accompany a numbered step procedure."; "Zöe, did you provide a diagram?"; "apologies, Tristan but left out the diagram, but I am working on one")); an inclination or predisposition towards a recurring theme. can be used to build profiles (user profile information) that reflect individual biases, preferences, goals, and objectives. As used herein, "goals" can include preferences, biases, measurable outcomes (e.g., sales quota), ambitions, priorities, or the like. Step 416 can provide an Al-driven personalized assistance, informed by user-specific insights, mitigating generic system biases.

During step 420, a determination is made whether the user profile is complete. If yes, process 400 can move to the next step. If no, process 400 can repeat.

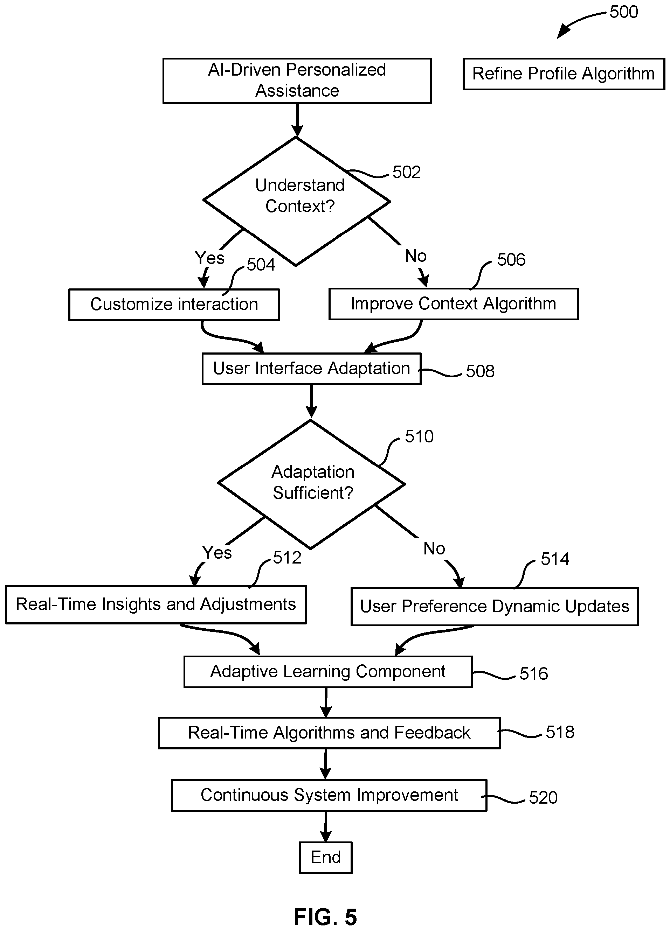

FIG. 5 illustrates a process 500 for Al-driven personal assistance suitable for use with steps 116 and 124. Process 500 includes a determination step of whether a context is understood step 502, customize interaction step 504, improve context algorithm step 506, user interact adaptation step 508, a determination step 510 of whether the adaptation is sufficient, real-time insights adjustment step 512, user preference dynamic update step 514, an adaptive learning step 516, a feedback step 518, and a continuous improvement step 520.

During step 502, process 500 determines whether a context is known or understood. An example of a method to determine a context of an electronic communication is set forth in U.S. Application No. 15/009,187, entitled METHOD AND SYSTEM OF PROVIDING CONTEXT AWARE ANNOUNCEMENTS, and filed January 18, 2016, the relevant portions of which are hereby incorporated herein by reference to the extent such contents do not conflict with the present disclosure.

If the context of associated with extracted information is known or understood, process 500 proceeds to step 504. During step 504, the user profile information is updated with the context information and context-driven information can be provided to the user during step 116.

If the context is not understood or recognized, the context determination algorithm can be improved during step 506. For example, using the method described in the '187 application.

During step 508, a user interface is adapted based on whether the context is understood. If the context is understood, process 500 can present context-based information. If the context is not understood, process 500 may so inform a user via a user interface. With insights into the user's context (e.g., user preferences and ongoing projects), the method can adapt to different scenarios, such as meetings or personal engagements (e.g., in a meeting; with a customer; with your mom). The user interface used during step 508 can present insights discreetly and adjust in real-time to changing user preferences or directives. Adjustments to the user interface can be made dynamically during step 512. A good example of this is when the user decides to abandon a previously preferred approach due to new directives (e.g., ok, forget my attempt to adhere to waterfall...will go agile in light of other team members' persuasion).

If it is determined during step 510 that the adaptation is not sufficient, a user preference information is updated during step 514.

During step 516, adaptive learning is performed. During this step, a determination is made whether the virtual assistant was helpful or not is checked via user feedback (through the user interface)-e.g., promoted via validated responses. The system learns from the feedback loop (i.e., the assistance given appears to have worked), therefore, similar data sources will be mined for future assistance.

During steps 518 and 520, algorithms used to determine preferences and goals information can be updated. Algorithms are used to reflect the outcome of constantly monitoring communications until a goal or bias is detected, validated, then the algorithm is updated on a continuous basis. The algorithms are configured to process data and make decisions in real time. The adaptive learning component ensures that the virtual assistant doesn't just provide static, canned responses. Instead, it continuously improves, becoming more efficient, responsive, and personalized in its interactions over time.

FIG. 6 illustrates an electronic communication system 600 in accordance with further examples of the disclosure. Electronic communication system 600 can be used to, for example, perform a method, such as method 100, and various processes described herein.

In the illustrated example, electronic communication system 600 includes an application programming interface (API) gateway 614, a data extraction engine 616, a goal determination module 618, one or more databases 624, 626, and a virtual assistant module 628.

Electronic communication system 600 can additionally include or be coupled to one or more of a user device 602, one or more servers or data sources 604-612, and/or a participant device 620. Various components of electronic communication system 600 can form part of a network 622.

Devices 602, 620 can be or include any suitable device with wired or wireless communication features and that can connect to network 622. For example, one or more of devices 602, 620 can be or include a wearable device, a tablet computer, a wired phone, a mobile phone, a personal (e.g., laptop or desktop) computer, a streaming device, such as a game console or other media streaming device, or the like. One or more of devices 602, 620 can include an application or client 630 to perform various functions set forth herein and/or to cause to be displayed text and/or other information as described herein. By way of example, an application or client 630 can include a user interface that displays virtual assistant information as described herein and/or that allows a user to provide user and/or feedback and/or user profile information as described herein.

Network 622 can include or be, for example, an internet protocol (IP) network. Exemplary types of networks suitable for network 622 can be or include a local area network, a wide-area network, a metropolitan area network, one or more wireless networks, or a portion of the Internet. Various components of network 622 can be coupled to one or more other components using an Ethernet connection, otherwired connections, and/or wireless interfaces. Network 622 can be coupled to other networks and/or to other devices typically coupled to networks. By way of particular example, network 622 includes a communication network and network 622 can be coupled to additional networks that can be coupled to one or more devices, such as devices 602 and 620. Exemplary additional networks can include a network similar to network 622, a public switched telephone network (PSTN), or the like.

Servers or data sources 604-612 can be or include any suitable server(s). Servers 604-612 can perform various functions as described herein. For example, server 604 can be a communication (e.g., a private branch exchange (PBX) server), server 606 can be a text server, server 608 can be an email server, server 610 can be a document or file server, and server 612 can be a social media server. Although separately illustrated, various servers 604-614 can be combined in a single system or machine. Further, it will be appreciated that other servers and/or data sources can be coupled to or form part of electronic communication system 600.

Electronic communication system 600 includes various engines, database(s), and/or modules as described herein. As used herein, the terms engine and module may be used interchangeably. In some cases, a module can include one or more engines and/or be coupled to one or more engines.

The terms "module" or "engine" can refer to computer program instructions, encoded on computer storage medium for execution by, or to control the operation of, data processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., solid-state memory that forms part of a device, disks, or other storage devices).

As noted above, application programming interface (API) gateway 614 is coupled to one or more data sources 604-612. API gateway 614 is configured to determine permissions to one or more data sources 604-612 to allow extraction of information from the one or more data sources 604-612.

Data extraction engine 616 is coupled to API gateway 614. In accordance with examples of the disclosure, data extraction engine 616 is configured to receive information from the one or more data sources 604-612 and to generate extracted information. The extracted information can include, for example, text from transcribed electronic communications, emails, documents, texts, social media information, excerpts thereof, and/or the like. Although not separately illustrated, in some cases, the extracted information can be stored in a database, such as database 624.

Goal determination engine 618 is coupled to data extraction engine 616 and/or database 624. Goal determination engine 618 is configured to determine one or more of goals and preferences and/or other parameters, such as bias or other parameters noted herein from the extracted information. For example, goal determination engine 618 can determine a user's goals, biases, preferences or the like as described above in connection with step 110.

For example, goal determination engine 618 can use natural language processing (NLP) to identify one or more goals, preferences, biases, or the like of a user and cause the one or more of user goals, preferences, biases, or the like to be stored in a database, such as database 624.

As illustrated, electronic communication system 600 can include a context determination engine 617 to determine a context of the extracted information. Context determination engine 617 can be part of or be coupled to goal determination module 618. Context determination engine 617 can determine a context of extracted information and/or of information of a communication between devices 602 and 620-e.g., using techniques described above in connection with process 500.

As further illustrated, electronic communication system 600 can include a sentiment analysis engine 619 to determine a sentiment of the extracted information and/or of information communicated between devices 602 and 620 during an electronic communication. Sentiment analysis engine 619 can determine a sentiment of extracted information and/or of information of a communication between devices 602 and 620-e.g., using techniques described above in connection with step 112. Sentiment analysis engine 619 can analyze the extracted information and/or the information during communications to determine sentiment information. For example, sentiment analysis engine 619 can review audio and/or transcribed information and determine sentiment based on matching predefined words or phrases with words or terms stored in a database, such as database 610, 614 or another database. The match need not be with identical terms. The match can be to synonyms stored within the database. Additionally or alternatively, a loudness or a change in loudness (e.g., 10 decibels or more or 15 decibels or more) can be used to determine a sentiment, such as anger or frustration. In some cases, sentiment analysis engine 619 can perform machine learning and update words, phrases, and/or the like associated with the words and phrases based on the learning.

Virtual assistant module 628 is configured to provide personalized coaching information to user device 602 based on the one or more of goals and preferences determined using goal determination engine 618. Virtual assistant module 628 can use AI techniques as described herein applied to personalize user information-e.g., including goals and preferences information, context information, and/or sentiment information as described herein. For an illustrative example, Alexia is an executive at a tech company. She oversees mergers and acquisitions. Alexia's meeting apparatus has embedded in it, a virtual assistant that helps with business strategy discussions. During a shareholders meeting, the virtual assistant, configured to review company documents and presentations to investors, notices something interesting in Alexia's presentations about a recent set of mergers. The virtual assistant system picks up on Alexia's demonstrated proclivity for acquiring companies with innovative R&D departments, something she hadn't explicitly stated but was implied in past presentations. Alexia prepares for a quarterly business, investor meeting. The virtual assistant suggests that she "emphasize the company's strategy of targeting acquisitions with strong R&D departments". It also reminds Alexia to chronicle the company's commitment to robust R&D budgets during these mergers, a point that was well received in past meetings. During the investor meeting, the virtual assistant is discretely active on Alexia's laptop. In the midst of the Zoom or Teams call, it discreetly prompts Alexia to talk about the importance of "R&D strengths" in their "M&A war room" meeting. Alexia observes the prompt and skillfully integrates these points into her conversation. The investors like it and are clearly invested in this approach. Alexia quickly clicks a 'thumbs up' icon on the virtual assistant's interface as she is pleased with the response. This positive feedback is recorded by the system: focusing on R&D in M&As; R&D budgeting banter is helpful during M&A topics. The virtual assistant gives extra weight to information related to R&D and robust budgeting practices. This is especially evident when reviewing high-impact presentation documents like shareholder presentations as opposed to emails (less helpful). All meeting interactions and assistant feedback from Alexia makes the virtual assistant a good little helper in future proceedings.

Database(s) 624, 626 can include one or more devices, such as computers or servers (or portion(s) thereof), to store information. By way of examples, database 624 or 626 can use one or more of Microsoft SQL Server, MySQL, Microsoft Access, Oracle, or the like relational database systems. In accordance with examples of the disclosure, database 624 can include or store user information or extracted information or user profile information as described herein. Database 626 can include or store supplemental information, such as standards or regulatory information that can be provided to user device (e.g., using virtual assistant module 612) during an electronic communication.

The present invention has been described above with reference to a number of exemplary embodiments and examples. It should be appreciated that the particular embodiments shown and described herein are illustrative of the invention and its best mode. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention, as defined by the appended claims.

## Claims

1. An electronic communication method with adaptive personalization and coaching, the method comprising the steps of:
using an application programming interface gateway, determining permissions to one or more data sources;
using a data extraction engine, extracting information from the one or more data sources to obtain extracted information;
using a goal determination module, determining user preferences and goals information based on the extracted information;
using a virtual assistant module, generating personalized coaching information based on the user preferences and goals information; and
transmitting the personalized coaching information to a user device.

2. The method of claim 1, wherein the step of using a goal determination module comprises using natural language processing and/or wherein the step of using a goal determination module comprises using a context determination engine to determine a context associated with the extracted information.

3. The method of claim 1 or claim 2, wherein the step of using a goal determination module comprises using a sentiment analysis engine to determine a sentiment associated with the extracted information.

4. The method of any preceding claim, further comprising transmitting regulatory and standards information to the user device.

5. The method of any preceding claim, further comprising storing the user preferences and goals information in a database.

6. The method of any preceding claim, further comprising a step of updating user information based on the personalized coaching information.

7. The method of any preceding claim, further comprising receiving from a user, user feedback, and updating the user preferences and goals based on the feedback.

8. The method of any preceding claim, further comprising monitoring the one or more data sources for additional information.

9. The method of any preceding claim, further comprising repeating the steps of:
using a data extraction engine, extracting information from the one or more data sources to obtain extracted information;
using a goal determination module, determining user preferences and goals based on the extracted information;
using a virtual assistant module, generating personalized coaching information based on the user preferences and goals; and
transmitting the personalized coaching information to a user device.

10. The method of any preceding claim, further comprising determining one or more topics associated with the extracted information and/or further comprising using machine learning to classify segments of the extracted information.

11. An electronic communication system with adaptive personalization and coaching, the system comprising:
an application programming interface gateway coupled to one or more data sources;
a data extraction engine configured to receive information from the one or more data sources and to generate extracted information;
a goal determination engine configured to determine one or more of goals and preferences from the extracted information; and
a virtual assistant module configured to provide personalized coaching information to a user device based on the one or more of goals and preferences.

12. The system of claim 11, further comprising a database comprising user information.

13. The system of claim 11 or claim 12, further comprising a user interface, wherein the user interface is configured to receive a command from the user to endorse, suspend, and/or change a frequency of receipt of personalized coaching information by a user device.

14. The system of any of claims 11 to 13, further comprising a context determination engine to determine a context of the extracted information.

15. An electronic communication system with adaptive personalization and coaching, the system comprising:
one or more data sources;
an application programming interface gateway coupled to the one or more data sources;
a data extraction engine configured to receive information from the one or more data sources and to generate extracted information;
a goal determination engine configured to determine one or more of goals and preferences from the extracted information; and
a virtual assistant module configured to provide personalized coaching information to a user device based on the one or more of goals and preferences and optionally wherein the one or more data sources comprise one or more of a communication server, a text server, an email server, a document server, and a social media server.
